# EUROPÄISCHE PATENTSCHRIFT

(11) **EP 0 540 474 B1**
(45) Veröffentlichungstag und Bekanntmachung des Hinweises auf die Patenterteilung: **14.06.1995**
(21) Anmeldenummer: 92810825.7
(22) Anmeldetag: 26.10.1992
(51) Int. Cl.: G01L 1/10, G01L 1/26

(54) **Kraftmesseinrichtung**
Force measuring device
Dispositif de mesure de force

(30) Priorität: 31.10.1991 CH 3184/91
(43) Veröffentlichungstag der Anmeldung: 05.05.1993
(73) Patentinhaber: K-TRON TECHNOLOGIES, INC., Wilmington, DE 19801 (US)
(72) Erfinder: Saner, Kaspar, CH-8600 Dübendorf (CH)
(74) Vertreter: Eder, Carl E.

(56) Entgegenhaltungen:
- EP-A- 0 402 320
- DE-C- 3 924 629
- US-A- 3 335 381

## Beschreibung

Die Erfindung betrifft eine Kraftmesseinrichtung gemäss dem Oberbegriff des Anspruchs 1.

Eine solche Kraftmesseinrichtung kann als Wägezelle für die Waage einer Dosiereinrichtung oder einer sonstigen Waage dienen.

Eine aus der DE-C-39 24 629 bekannte Kraftmesseinrichtung weist eine Dose mit einer Achse auf. Die einstückige Dose besitzt einen Ring, der auf seiner Innenseite und auf seiner Aussenseite je mit einem Krafteinleitorgan zusammenhängt. Der Ring ist durch zur Achse parallele, von den Krafteinleitorganen auf ihn übertragene Kräfte verformbar und mit einem Messwandler zur Umwandlung einer Kraft in ein elektrisches Signal verbunden. Der Messwandler weist Dehnungsmessstreifen auf, die auf den beiden einander abgewandten Stirnflächen des verformbaren Rings befestigt sind.

Wenn bei der Verwendung einer derartigen Kraftmesseinrichtung beispielsweise das mit der Aussenseite des verformbaren Rings verbundene, ring- oder mantelförmige, äussere Krafteinleitorgan auf einer festen Auflage steht und eine vertikal nach unten gerichtete Druckkraft an dem mit der Innenseite des verformbaren Rings verbundenen, inneren Krafteinleitorgan angreift, wird der Ring verformt. Diese Verformung ist im Idealfall entlang dem ganzen Ringumfang identisch. Wenn jedoch die Druckkraft ein wenig exzentrisch zur Achse angreift, hat auch die auf den Ring ausgeübte Kraft oder Kraftdichte entlang von dessen Umfang unterschiedliche Grössen. Dementsprechend wird der Ring entlang seinem Umfang ungleichmässig stark verformt, wodurch Messfehler entstehen können. Wie es aus der zitierten DE-C-39 24 629 hervorgeht, sollten Dehnungsmessstreifen zudem dicht gegen die Umgebung abgekapselt werden. Die mit Dehnungsmessstreifen durchgeführten Kraftmessungen sind ferner sehr empfindlich auf Änderungen der elektrischen Speise- oder Referenzspannung sowie auf Temperaturänderungen. Des weitern können solche Messungen durch die Übergangswiderstände von elektrischen Verbindungen und durch eventuell bei solchen Verbindungen entstehende Kontaktspannungen beeinflusst werden. Bei der Verwendung von Dehnungsmessstreifen erfordert die Ermöglichung genauer Messungen aufwendige Massnahmen, so dass die Herstellung von genaue Messungen ermöglichenden Kraftmesseinrichtungen - insbesondere bei kleinen Stückzahlen - relativ teuer ist.

Es sind ferner Kraftmesseinrichtungen mit einem Messwandler bekannt, der mindestens eine beim Messen schwingende Saite aufweist. Zum Beispiel sind aus der EP-A-0 402 320 Messwandler mit einer Kraftübertragungsvorrichtung bekannt, die zwei in Abstand voneinander angeordnete Plättchen aufweist. Diese bilden zusammen mit sie verbindenden Stiften die Saite haltende Halterungen. Wenn beim Messen eine zu messende Kraft in die Kraftübertragungsvorrichtung eingeleitet wird, bewirkt dies eine Abstandsänderung der beiden Halterungen.

Die Messwandler dieser bekannten, eine Saite aufweisenden Kraftmesseinrichtungen sind gut zum Messen von auf die Kraftübertragungsvorrichtung einwirkenden Kräften geeignet, die relativ klein sind und beispielsweise höchstens 50 bis 100 N betragen. Es besteht jedoch ein Bedürfnis, auch wesentlich grössere Kräfte messen zu können. Ein solches Bedürfnis besteht zum Beispiel bei Kraftmesseinrichtungen, die bei gravimetrisch arbeitenden Dosiereinrichtungen zum Wägen eines Speicherbehälters verwendet werden.

Es sind auch verschiedene Kraftmesseinrichtungen bekannt, die einen Messwandler mit mindestens einer Saite und eine Kraftübertragungsvorrichtung aufweisen, die eine ziemlich grosse Kraftuntersetzung ermöglicht. Die US-A-4 240 289 offenbart zum Beispiel Kraftmesseinrichtungen mit einem Gestell und einem mit einer Parallelführung von diesem geführten Lastaufnehmer, der über eine erste Feder mit dem Gestell und über eine zweite, weichere Feder mit der Saite eines Wandlers verbunden ist. Diese und andere, mehr oder weniger ähnliche Kraftmesseinrichtungen beanspruchen jedoch ziemlich viel Platz. Bei einer für eine gravimetrische Dosiereinrichtung vorgesehenen Kraftmesseinrichtung und bei vielen andern möglichen Verwendungen einer solchen ist es jedoch erwünscht, wenn die zur Kraftuntersetzung dienende Kraftübertragungsvorrichtung und der Messwandler möglichst klein und kompakt sind.

Der Erfindung liegt daher die Aufgabe zugrunde, eine Kraftmesseinrichtung zu schaffen, die ermöglicht, Nachteile der bekannten Kraftmesseinrichtungen zu vermeiden. Dabei soll insbesondere ausgehend von der DE-C-39 24 629 ermöglicht werden, auch Messwandler mit einer Saite verwenden zu können und möglichst weitgehend zu vermeiden, dass eine entlang dem Umfang des verformbaren Rings ungleichmässige Verformung von diesem Messfehler verursacht.

Diese Aufgabe wird durch eine Kraftmesseinrichtung gelöst, die gemäss der Erfindung die Merkmale des Anspruchs 1 aufweist.

Vorteilhafte Ausgestaltungen der erfindungsgemässen Kraftmesseinrichtung gehen aus den abhängigen Ansprüchen hervor.

Die Kraftmesseinrichtung hat einen Ring, der durch zu seiner Achse parallele Kräfte verformbar ist und nämlich durch Scherung elastisch verformt werden kann. Eine zur Kraftmesseinrichtung gehörende Kraftübertragungsvorrichtung besitzt mindestens einen Rahmen und vorzugsweise zwei entlang der Achse des Rings voneinander in Abstand stehende Rahmen. Der bzw. jeder Rahmen ist bei ersten Verbindungsstellen mit dem verformbaren Ring verbunden. Die Anzahl dieser ersten Verbindungsstellen beträgt vorzugsweise 2ⁿ, wobei n vorzugsweise eine ganze, gerade und mindestens 2 betragende Zahl ist. Der bzw. jeder Rahmen hängt bei zweiten Verbindungsstellen mit zwei Bügeln zusammen, von denen jeder bei einer dritten Verbindungsstelle mit einem Messwandler verbunden ist. Dieser kann vorzugsweise zusammen mit elektronischen Schaltungsmitteln ein elektrisches Signal erzeugen, das ein Mass für eine zu messende Kraft gibt.

Zusätzlich zur bereits genannten, ersten Kraftübertragungsvorrichtung ist vorzugsweise noch eine zweite, zum Messwandler gehörende Kraftübertragungsvorrichtung vorhanden. Der Messwandler weist vorzugsweise ein von dieser gehaltenes Wandelelement auf, das aus einem metallischen elektrisch leitenden Material besteht und von dem mindestens ein Abschnitt länglich sowie mindestens im Ruhezustand gerade ist. Der Messwandler besitzt vorzugsweise noch mindestens zwei und beispielsweise vier Permanentmagnete, die mindestens ein den genannten Abschnitt des Wandelelementes kreuzendes Magnetfeld erzeugen. Der genannte Abschnitt des Wandelelementes kann dann eine beim Messen schwingende Saite bilden, deren Schwingungsfrequenz ein Mass für die sie spannende Kraft und damit für die zu messende Kraft gibt. Die Verwendung eines Messwandlers mit einer Saite ermöglicht eine genaue Kraftmessung bei relativ geringen Kosten für die Herstellung des Messwandlers und der zu dessen Betrieb erforderlichen, elektronischen Schaltungsmittel.

Die verschiedenen Teile des Messwandlers können zum Beispiel gleich oder ähnlich ausgebildet sein wie bei in der bereits zitierten EP-A-0 402 320 beschriebenen Messwandlern. Es wird daher hiermit ausdrücklich bezug auf diese Druckschrift genommen.

Der Erfindungsgegenstand wird nun anhand in der Zeichnung dargestellter Ausführungsbeispiele näher beschrieben. In der Zeichnung zeigt
die Fig. 1 einen vereinfachten Vertikalschnitt durch eine Kraftmesseinrichtung,
die Fig. 2 eine vereinfachte, von der unteren Seite der Fig. 1 her Ansicht der Kraftmesseinrichtung bei entferntem Kraftverteiler,
die Fig. 3 einen ebenfalls etwas vereinfachten Ausschnitt aus der Fig. 1 in grösserem Massstab,
die Fig. 4 eine der Fig. 2 entsprechende Ansicht einiger in dieser ersichtlicher Teile im gleichen Massstab wie die Fig. 3,
die Fig. 5 einen Vertikalschnitt durch einige Teile der Kraftmesseinrichtung in etwas kleinerem Massstab als die Fig. 1 in unbelastetem Zustand,
die Fig. 6 einen Vertikalschnitt durch die in der Fig. 5 ersichtlichen Teile, aber in belastetem Zustand,
die Fig. 7 eine diagrammartige Darstellung von Teilen einer zur Kraftmesseinrichtung gehörenden Kraftübertragungsvorrichtung und
die Fig. 8 eine schematische Darstellung von Teilen einer Variante einer Kraftübertragungsvorrichtung.

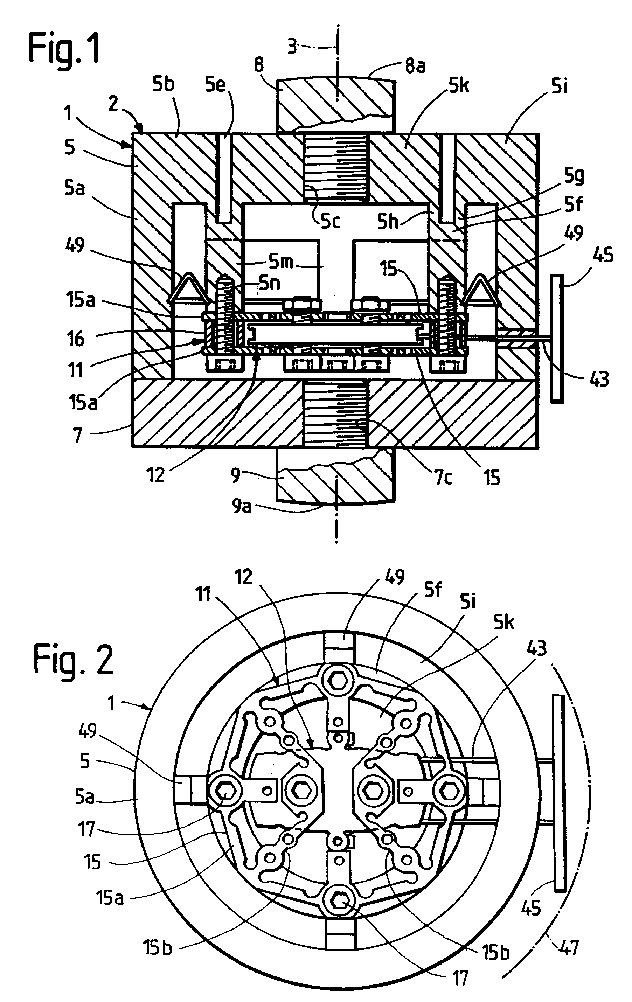

Die in den Figuren 1 und 2 dargestellte Kraftmesseinrichtung 1 weist eine Messkammer 2 mit einer vertikalen Achse 3 und einer mindestens im allgemeinen zu dieser rotationssymetrische Dose 5 auf. Diese ist aus einem einstückigen, metallischen, Körper gebildet und besitzt einen Mantel 5a und eine mit dessen oberem Ende zusammenhängende Endwand 5b. Die letztere hat im Zentrum ein zur Achse 3 koaxiales Loch 5c, das mindestens zum Teil mit einem Innengewinde versehen ist. Die Dose 5 weist ferner einen von der Innenfläche der Endwand 5b nach unten in den Dosen-Innenraum hineinragenden, ringförmigen Vorsprung auf. Die Endwand 5b ist mit einer Ringnut 5e versehen, die von der Aussenfläche der Endwand in den ringförmigen Vorsprung hineinragt. Dieser bildet daher einen die Achse 3 umschliessenden, zu dieser koaxialen, elastisch verformbaren Ring 5f. Dieser hat in unverformtem Zustand innen sowie aussen eine kreiszylindrische Mantelfläche und an seinem der Endwand 5b abgewandten Rand eine ebene, zur Achse 3 radiale Stirnfläche. Der Ring 5f hängt auf seiner Aussenseite - d.h. bei seiner äussern Mantelfläche - und auf seiner Innenseite - d.h. bei seiner innern Mantelfläche - über je ein Biegegelenk 5g bzw. 5h mit der Endwand 5b zusammen. Der Mantel 5a und der sich ausserhalb der Ringnut 5e befindende, ringförmige Bereich der Endwand 5b bilden zusammen ein äusseres, im wesentlichen starres Krafteinleitorgan 5i. Der sich innerhalb der Ringnut 5e befindende Bereich der Endwand 5b dient als inneres, im wesentlichen starres Krafteinleitorgan 5k. Die Dose 5 besitzt vier gleichmässig entlang dem Umfang des Rings 5f verteilte, mit diesem zusammenhängende, in unverformtem Zustand von diesem parallel zur Achse 3 von der Ring-Stirnfläche wegragende Arme 5m. Jeder von diesen ist mit zur Achse 3 parallelen Gewindebohrung 5n versehen, die in eine am freien Ende des Arms vorhandene, ebene Endfläche mündet.

Die Messkammer 2 weist einen zur Achse 3 koaxialen und mindestens im wesentlichen rotationssymmetrischen, plattenförmigen, metallischen Kraftverteiler 7 auf. Dieser liegt an der Endfläche des Mantels 5a an und ist durch nicht gezeichnete Schraubverbindungen starr und lösbar mit dem Mantel 5a verbunden. Der Kraftverteiler 7 besitzt in seinem Zentrum ein zur Achse 3 koaxiales Loch 7c, das mindestens zum Teil mit einem Innengewinde versehen ist.

In jedes der beiden Löcher 5c, 7c ist ein metallischer Zapfen 8 bzw. 9 eingeschraubt, der einen von der Endwand 5b bzw. dem Kraftverteiler 7 weg nach aussen, d.h. nach oben bzw. unten ragenden Kopf hat. Dieser besitzt an seinem der Dose 5 abgewandten Ende eine konvex gewölbte Stirnfläche 8a bzw. 9a.

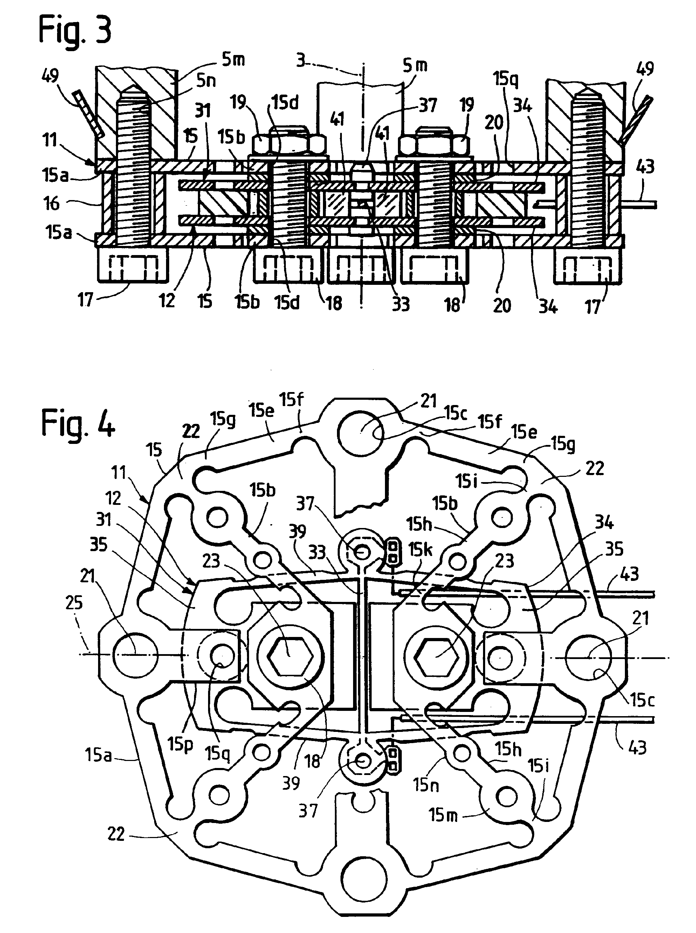

Der verformbare Ring 5f ist über eine erste Kraftübertragungsvorrichtung 11 mit einem Messwandler 12 verbunden, von dem in den Figuren 1 sowie 2 zur Verbesserung der Klarheit nur die Umrisse dargestellt sind. Die erste Kraftübertragungsvorrichtung 11 und der Messwandler 12 sind besonders deutlich in den Figuren 3 und 4 ersichtlich. Die erste Kraftübertragungsvorrichtung 11 weist zwei entlang der Achse 3 voneinander in Abstand stehende, einstückige, zumindest in unverformtem Zustand ebene, zueinander parallele, sowie zur Achse 3 rechtwinklige, metallische Plättchen 15 auf, von denen jedes einen Rahmen 15a und zwei mit diesem zusammenhängende Bügel 15b bildet. Die Zentren der beiden Rahmen liegen auf der Achse 3. Die Rahmen 15a und Bügel 15b überdecken einander in einer zur Achse 3 parallelen Projektion. Jeder Rahmen hat vier gleichmässig entlang seinem Umfang verteilte Augen, deren durchgehende Löcher 15c parallel zur Achse 3 paarweise miteinander fluchten. Bei jedem miteinander fluchtenden Paar von Löchern 15c ist eine Distanzhülse 16 zwischen den beiden Rahmen 15a angeordnet. Ferner ist die erste Kraftübertragungsvorrichtung 11 bei jedem Paar miteinander fluchtender Löcher 15c durch eine diese sowie die Distanzhülse 16 durchdringende, in eine Gewindebohrung 5n eingeschraubte Schraube 17 lösbar und starr an einem der Arme 5m befestigt. Jeder Bügel 15b hat zwei mit einem der Rahmen 15a zusammenhängende Enden, ragt in den von diesem umschlossenen Innenraum hinein und hat bei seinem Scheitel ein Auge mit einem durchgehenden Loch 15d. Der Messwandler 12 befindet sich zwischen den zwei Plättchen 15 und ist mit zwei je ein Paar miteinander fluchtende Löcher 15d durchdringenden Schrauben 18 sowie zugeordneten Muttern 19 lösbar mit den beiden Bügeln 15b verbunden. Zwischen jedem Bügel 15b und der ihm zugewandten Seite des Messwandlers 12 ist eine Unterlags- und/oder Federscheibe 20 vorhanden, welche den Messwandler in Abstand vom betreffenden Bügel hält.

Die beiden Rahmen 15a sind also je bei vier durch die Löcher 15c definierten, ersten Verbindungsstellen 21 über die Arme 5m mit dem verformbaren Ring 5f verbunden. Des weitern ist jeder Bügel 15b mit einem der Rahmen 15a bei zwei zweiten Verbindungsstellen 22 verbunden, die sich entlang dem Rahmenumfang auf verschiedenen Seiten von ein und derselben ersten Verbindungsstelle 21 zwischen dieser und einer dieser benachbarten, ersten Verbindungsstelle 21 befinden. Die Löcher 15d definieren dritte Verbindungsstellen 23, bei denen die Bügel 15b mit dem Wandler 12 verbunden sind. Dabei überdecken die Verbindungsstellen 21, 22, 23 einander paarweise in einer zur Achse 3 parallelen Blickrichtung.

Jeder Rahmen 15a hat zwischen einer ersten Verbindungsstelle 21 und jeder dieser benachbarten, zweiten Verbindungsstelle 22 einen geraden Schenkel 15e, der über ein Biegegelenk 15f bzw. 15g mit dem die erste bzw. zweite Verbindungsstelle enthaltenden Rahmenabschnitt verbunden ist. Jeder Bügel 15b besitzt zwei gerade Schenkel 15h, die zusammen einen Winkel bilden. Jeder Schenkel 15h ist über ein Biegegelenk 15i mit einem der eine zweite Verbindungsstelle 22 bildenden Rahmenabschnitte und über ein Biegegelenk 15k mit dem die dritte Verbindungsstelle 23 des betreffenden Bügels enthaltenden Bügelabschnitt verbunden. Die Biegegelenke 15f, 15g, 15i, 15k sind dabei jeweils durch eine Einschnürung gebildet. Jeder Schenkel 15h der Bügel 15b hat noch mindestens ein Auge und nämlich zwei Augen 15m, 15n, von denen jedes durch eine kreisförmige Erweiterung mit einem kreisförmigen Loch gebildet ist. Ferner ist bei jedem ein Loch 15c begrenzenden Auge jedes Rahmens 15a ein gegen dessen Zentrum ragender Lappen 15p mit einem Loch 15q vorhanden.

Die ersten Verbindungsstellen 21 und die zweiten Verbindungsstellen 22 definieren zusammen ein Polygon, nämlich ein Achteck. Dabei haben alle entlang dem Umfang eines Rahmens aufeinanderfolgenden ersten und zweiten Verbindungsstellen den gleichen Abstand voneinander. Die zweiten Verbindungsstellen 22 sind jedoch weiter vom Zentrum des betreffenden Rahmens und der durch dieses verlaufenden Achse 3 entfernt als die ersten Verbindungsstellen 21. Dabei bildet jedes Paar von einander benachbarten Schenkeln des Polygons bzw. Rahmens 15a einen Winkel, dessen Scheitel vom Polygon- bzw. Rahmenzentrum und also von der Achse 3 weg nach aussen ragt. Anders gesagt definiert jede erste oder zweite Verbindungsstelle mit den beiden ihr benachbarten, zweiten bzw. ersten Verbindungsstellen ein gleichschenkliges Dreieck, dessen entlang dem Rahmenumfang mittlere und der längsten Seite des Dreiecks gegenüberstehende Ecke vom Zentrum des Rahmens 15a weg nach aussen ragt. Die von einem Paar Schenkel des Polygons bzw. Rahmens gebildeten Winkel sind bei den ersten Verbindungsstellen 21 grösser als bei den zweiten Verbindungsstellen 22 und betragen bei den ersten Verbindungsstellen beispielsweise ungefähr 140° bis 160° und bei den zweiten Verbindungsstellen beispielsweise ungefähr 110° bis 130°. Die beiden dritten Verbindungsstellen 23 jedes Plättchen 15 liegen in einer Ebene 25, die durch die Achse 3 und zwei erste Verbindungsstellen 21 jedes Plättchens 15 verläuft.

Der Messwandler 12 weist eine zweite Kraftübertragungsvorrichtung 31 und ein von dieser gehaltenes Wandelelement 33 auf. Die zweite Kraftübertragungsvorrichtung 31 weist zwei einstückige, zueinander parallele, entlang der Achse 3 voneinander in Abstand stehende, stellenweise fest miteinander verbundene, metallische Plättchen 34 auf. Die beiden rahmenförmigen Plättchen 34 bilden zusammen mit den sie in Abstand haltenden Teilen zwei Verbindungsorgane 35. Jedes Verbindungsorgan 35 ist durch eine der bereits erwähnten Schrauben 18 mit zwei Bügeln 15b verbunden. Die zweite Kraftübertragungsvorrichtung 31 besitzt des weitern zwei Halterungen 37, von denen jede durch Abschnitte der beiden Plättchen 34 und durch einen elektrisch isolierenden Stift gebildet ist. Ferner sind vier von den beiden Plättchen 34 gebildete, längliche Übertragungsglieder 39 vorhanden, welche die beiden Verbindungsorgane 35 über Biegegelenke derart mit den Halterungen 37 verbinden, dass eine Abstandsänderung der beiden Verbindungsorgane 35 eine Abstandsänderung der beiden Halterungen 37 verursacht.

Wie schon in der Einleitung geschrieben, können die verschiedenen Teile des Messwandlers 12 gleich oder ähnlich ausgebildet sein wie die entsprechenden Teile von in der EP-A-0 402 320 beschriebenen Messwandlern, insbesondere des in dieser Druckschrift zuerst beschriebenen Ausführungsbeispiels. Es sei hierzu noch angemerkt, dass der Messwandler 12 nicht nur in den Figuren 1 und 2 stark vereinfacht, sondern auch in den Figuren 3 und 4 noch ein wenig vereinfacht gezeichnet ist und dass die beiden Verbindungsorgane 35 des Messwandlers 12 in der zitierten Druckschrift als Referenzorgan und Kraftaufnehmer bezeichnet sind.

Das längliche, einstückige elektrisch leitende Wandelelement 33 weist einen im Ruhezustand geraden, rechtwinklig zur Ebene 25 verlaufenden, eine Saite bildenden Abschnitt und an beiden Enden von diesem eine Öse auf, die am Stift von einer der beiden Halterungen 37 gehalten ist. Der Messwandler besitzt noch vier zwischen den beiden Plättchen 34 gehaltene Permanentmagnete 41, welche die Saite kreuzende Magnetfelder erzeugen. An den beiden Ösen des Wandelelements 33 sind elektrische Leiter 43 angelötet, die durch ein im Mantel 5a vorhandenes Loch hindurch mit einem in den Figuren 1 und 2 gezeichneten Schaltungsplättchen einer Elektronikvorrichtung 45 verbunden sind. Das Schaltungsplättchen ist zum Beispiel an einem nur teilweise und schematisch durch eine strichpunktierte Linie in der Fig. 2 angedeuteten, ringförmigen Gehäuse 47 befestigt, in dem die Dose 5 und der Kraftverteiler 7 derart gehalten sind, dass die Übertragung der zu messenden Kraft nicht beeinträchtigt wird. Im Innenraum der Dose 5 ist zwischen deren Mantel 5a und jedem der vier Arme 5m ein V-förmiges, federndes Bimetallelement 49 vorhanden, dessen Enden in Kehlen des Mantels 5a bzw. des betreffenden Arms 5m gehalten sind.

Die Dose 5 und der Kraftverteiler 7 bestehen zum Beispiel aus einer Aluminiumlegierung, die eine relativ hohe Festigkeit besitzt. Die Zapfen 8 und 9 bestehen zum Beispiel aus Stahl, nämlich einem rostfreien, gehärteten Stahl. Die Plättchen 15 sowie 34 der beiden Kraftübertragungsvorrichtungen 11 bzw. 31 und das Wandelelement 33 bestehen zum Beispiel aus Kupferberylliumbronze. Im übrigen sind die Verbindungen zwischen der Dose 5, dem Kraftverteiler 7 und den Zapfen 8, 9 durch nicht gezeichnete Dichtungsmittel abgedichtet. Ferner ist auch die Durchführung der Leiter 43 durch den Mantel 5a abgedichtet, so dass der Innenraum der Messkammer wasserdicht gegen die Umgebung abgeschlossen ist.

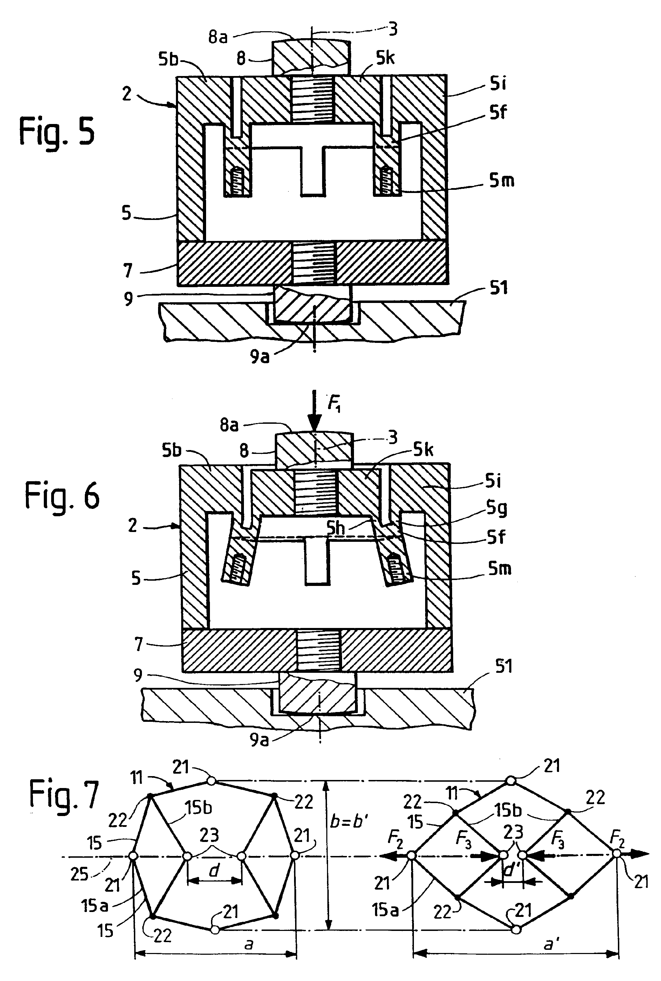

Nun wird die Wirkungsweise des verformbaren Rings 5f anhand der vereinfacht und zum Teil in den Figuren 5 und 6 gezeichneten Kraftmesseinrichtung erläutert. Der untere Zapfen 9 der Kraftmesseinrichtung ragt mit etwas radialem Spiel in eine Vertiefung einer Auflage 51 hinein und liegt mit seiner gewölbten Stirnfläche 9a auf der Grundfläche der Vertiefung auf. In der Fig. 5 befindet sich die Dose in unbelastetem Zustand. Dagegen wird in der Fig. 6 durch ein nicht gezeichnetes Organ eine zu messende, parallel zur Achse 3 gerichtete Kraft F₁ auf den Scheitel der gewölbten Stirnfläche 8a des oberen Zapfens 8 ausgeübt. Diese Kraft wird durch das innere Krafteinleitorgan 5k um die Achse 3 herum verteilt und über das Biegegelenk 5h auf die Innenseite des verformbaren Rings 5f übertragen. Die Auflage 51 übt eine die gleiche Grösse wie die Kraft F₁ aufweisende Reaktions- oder Auflagekraft auf den Zapfen 9 aus, die durch den Kraftverteiler 7 sowie das äussere Krafteinleitorgan 5i um die Achse 3 herum verteilt und über das Biegegelenk 5g auf die Aussenseite des verformbaren Rings 5f übertragen wird. Am letzteren greifen also innen und aussen zur Achse 3 parallele, aber einander entgegengesetzte Kräfte an. Diese Kräfte verformen den Ring elastisch durch eine Scherung, so dass die untere, freie Stirnfläche des Rings 5f nach aussen gegen die Endwand 5b geneigt wird und der untere Rand des Rings 5f sowie vor allem die Arme 5m nach aussen gespreizt werden.

Nun wird anhand der Fig. 7 die Wirkungsweise der ersten Kraftübertragungsvorrichtung 11 erläutert. Das linke Teildiagramm der Fig. 7 zeigt eine stark schematisierte Draufsicht auf den von einem Plättchen 15 gebildeten Rahmen 15a und die beiden mit diesem zusammenhängenden Bügel 15b der sich in unverformtem Zustand befindenden ersten Kraftübertragungsvorrichtung 11. Dabei sind die Schenkel des Rahmens 15a und der Bügel 15b durch Striche, die ersten sowie dritten Verbindungsstellen 21 bzw. 23 durch leere Kreise und die zweiten Verbindungsstellen 22 durch volle Punkte dargestellt. Im linken Teildiagramm der Fig. 7 sind die Abstände der zwei Paare von sich diametral gegenüberstehenden, ersten Verbindungsstellen 21 mit a bzw. b bezeichnet, wobei a = b ist. Ferner ist im linken Teildiagramm der Abstand der beiden dritten Verbindungsstellen 23 mit d bezeichnet.

Nun wird angenommen, dass der verformbare Ring 5f durch eine auf ihn einwirkende Kraft derart verformt wird, dass er die in der Ebene 25 liegenden, ersten Verbindungsstellen 21 der beiden übereinander angeordneten Rahmen 15a gemäss dem rechten Teildiagramm der Fig. 7 mit einer Kraft F₂ voneinander wegzieht. Dadurch wird der Rahmen 15a entlang der Ebene 25 gestreckt, so dass der Abstand der in dieser Ebene liegenden, ersten Verbindungsstellen auf a′ vergrössert wird. Ferner wird zunächst angenommen, dass der Abstand b′ der beiden andern, ersten Verbindungsstellen 21 des verformten Rahmens gleich dem entsprechenden Abstand b des unverformten Rahmens ist. Bei dieser Verformung des Rahmens 15a werden die von den Rahmenschenkeln bei den zweiten Verbindungsstellen 22 gebildeten Winkel mehr oder weniger stark gestreckt - d.h. vergrössert - und die zweiten Verbindungsstellen 22 daher gegen die Ebene 25 verschoben. Diese Verschiebung der zweiten Verbindungsstellen 22 verursacht ihrerseits eine Annäherung der beiden dritten Verbindungsstellen 23, so dass deren Abstand auf den Wert d' abnimmt. Die dritten Verbindungsstellen 23 übertragen dann eine Kraft F₃ auf die Verbindungsorgane 35 des Messwandlers 12. Dadurch werden diese gegeneinandergedrückt, so dass ihr Abstand abnimmt. Diese Abstandabnahme bewirkt ihrerseits eine Vergrösserung des Abstandes der beiden Halterungen 37 voneinander, so dass die Saite des Wandelelements 33 stärker gespannt wird und beim Messen ihre Schwingungsfrequenz ändert.

Es sei noch angemerkt, dass die Verformungen der Dose 5 in der Fig. 6 und des zur ersten Kraftübertragungsvorrichtung 11 gehörende Plättchens 15 in der Fig. 7 sehr stark übertrieben gezeichnet wurden. In Wirklichkeit sind diese Verformungen sehr gering und praktisch nur virtueller Art, so dass die Kraftmesseinrichtung eine annähernd weglose Kraftmessung erlaubt. Wenn die Arme 5m beim Messen einer Kraft auseinandergespreizt werden, wie es in der Fig. 6 stark übertrieben dargestellt ist, werden übrigens die in unverformtem Zustand ebenen Plättchen 15 ein wenig gewölbt. Diese Wölbung ist jedoch sehr gering.

Vorgängig wurde angenommen, dass der verformbare Ring 5f von den vier ersten Verbindungsstellen 21 eines Rahmens 15a nur diejenigen zwei verschiebt, die in der Ebene 25 liegen. Wenn jedoch eine Kraft F₁ gemäss der Fig. 6 bei der Achse 3 auf die Dose 5 einwirkt, wird der Ring 5f rotationssymmetrisch zur Achse 3 elastisch verformt, so dass alle vier ersten Verbindungsstellen 21 eines Rahmens 15a von dessen Zentrum wegbewegt werden. Die beiden dritten Verbindungsstellen 23 werden auch bei einer derartigen Verformung eines Rahmens 15a aneinander angenähert.

Im Idealfall greift die zu messende Kraft F₁ und die durch diese von der Auflage 51 erzeugte Reaktionskraft genau bei der Achse 3 und/oder in einem zu dieser genau koaxialen Flächenbereich an den Zapfen 8 bzw. 9 an. Die Kraft F₁ und die genannte Reaktionskraft werden dann genau gleichmässig um die Achse herum entlang dem Umfang des Rings 5f verteilt, so dass dieser genau rotationssymmetrisch zur Achse 3 und also entlang seinem-Umfang genau gleichmässig verformt wird. In der Praxis können die zu messende Kraft F₁ und deren Reaktionskraft jedoch unter Umständen wegen des bei bewegbaren Teilen erforderlichen Spiels, wegen Fabrikationstoleranzen und aus andern Gründen ein wenig exzentrisch zur Achse 3 an den Zapfen 8 bzw. 9 angreifen. Dementsprechend sind die auf die Dose 5 und insbesondere die auf den Ring 5f einwirkenden Kräfte nicht mehr genau gleichmässig um die Achse 3 herum verteilt, so dass der Ring entlang seinem Umfang unterschiedlich verformt wird. Die Rahmen 15a und die Bügel 15b der ersten Kraftübertragungsvorrichtung 11 können jedoch ungleichmässige Verformungen - d.h. Scherungen - des Rings 5f weitgehend ausgleichen, so dass das Verhältnis F₃/F₁ mindestens nahezu unabhängig davon ist, ob die Kraftverteilung in der Dose 5 der Messkammer 2 genau rotationssymmetrisch zur Achse 3 ist oder nicht. Durch die erste Kraftübertragungsvorrichtung 11 kann also zumindest weitgehend verhindert werden, dass ungleichmässige Verformungen des Rings 5f Messfehler verursachen.

Die durch die Dose 5 und insbesondere durch den zu dieser gehörenden, elastisch verformbaren Ring 5f sowie die Arme 5m erzielbare Kraftuntersetzung hängt von der Bemessung der Dose 5 und vor allem des Rings 5f sowie der Arme 5m und von den elastischen Eigenschaften des die Dose bildenden Materials, vor allem vom Schubmodul ab. Der durch eine Scherung elastisch verformbare Ring kann zum Beispiel eine im Bereich von 10 bis 1000 liegende Kraftuntersetzung ergeben. Die erste Kraftübertragungsvorrichtung ergibt eine beispielsweise 2- bis 3-fache Kraftuntersetzung. Das Verhältnis zwischen der auf den Messwandler 12 übertragenen Kraft und der in die Dose eingeleiteten Kraft kann also zum Beispiel etwa im Bereich von 1:20 bis 1:3000 liegen.

Wenn die Schenkel 15h der Bügel 15b beim Messen zu ihren Längsrichtungen parallele Druckkräfte auf den Messwandler 12 übertragen, können ihre im unverformten Zustand im wesentlichen kreisringförmigen Augen 15m, 15n ein wenig zu einem Oval verformt werden. Die Augen 15m, 15n wirken also gewissermassen als Druckfedern und nehmen einen Teil der genannten Druckkräfte auf. Wenn kleine Serien von verschiedene Kraftuntersetzungen ergebende Messeinrichtungen herzustellen sind, besteht daher die Möglichkeit, zuerst eine relativ grosse Anzahl identisch ausgebildeter Plättchen herzustellen, deren Augen 15m, 15n nur relativ kleine Löcher haben, und diese dann nötigenfalls zur Festlegung der gewünschten Kraftuntersetzung durch Aufbohren zu vergrössern. Diese Möglichkeit trägt dazu bei, zum Messen von verschieden grossen Maximalkräften vorgesehene Kraftmesseinrichtungen auch bei kleinen Stückzahlen kostengünstig herstellen zu können. Die Löcher 15q der von der Ebene 25 durchdrungenen Lappen 15p sind koaxial zu Löchern in den Plättchen 34 des Messwandlers 12. Die Lappen 15p und ihre Löcher 15q dienen beim Verbinden der beiden Plättchen 15 mit dem vorher zusammengesetzten Messwandler 12 als Montagehilfsmittel, welche das richtige Positionieren der Plättchen 15 und des Messwandlers erleichtern.

Der Messwandler 12 kann - wie schon in der Diskussion des einen derartigen Messwandler aufweisenden Standes der Technik erwähnt - ausgebildet sein, um seinen Verbindungsorganen zugeführte Kräfte zu messen, deren Maximalwert im Bereich von 50 N bis 100 N liegt. Die Kraftmesseinrichtung kann dementsprechend zum Messen von Kräften F₁ ausgebildet werden, deren Maximalwerte zum Beispiel in einem Bereich von ungefähr 1 kN bis 300 kN liegen. Dabei kann die Messkammer 2 verhältnismässig klein und kompakt ausgebildet sein. Der Aussendurchmesser der Messkammer 2 kann ohne weiteres ungefähr oder weniger als 100 mm und beispielsweise 80 bis 90 mm betragen. Die axiale Aussenabmessung der Messkammer 2 kann ohne die Zapfen 8 und 9 höchstens 75 mm und zum Beispiel 50 bis 65 mm betragen.

Erfindungsgemässe Messeinrichtungen sind beispielsweise gut geeignet, um bei gravimetrischen Dosiereinrichtungen einen Speicherbehälter zu wägen, in dem ein zu dosierendes Gut gespeichert ist, das aus dem Speicherbehälter abgeleitet und/oder herausgefördert wird. Dabei kann der zu wägende Speicherbehälter zum Beispiel durch die Zapfen 8 von drei Messkammern 2 getragen werden, deren Zapfen 9 auf einer von einem Gestell oder Sockel gebildeten, festen Auflage aufliegen.

Der thermische Ausdehnungskoeffizient der die Dose 5 bildenden Aluminiumlegierung ist grösser als derjenige der Kupferberylliumlegierung, welche die Plättchen 15 der ersten Kraftübertragungsvorrichtung 11 und übrigens auch die Plättchen 34 der zweiten Kraftübertragungsvorrichtung 31 sowie das Wandelelement 33 bildet. Wenn sich also die Umgebungstemperatur der Messkammer 2 ändert- beispielsweise grösser wird- und auch die Temperaturen der Dose 5 sowie der Plättchen 15 entsprechend steigen, wird der Ring 5f prozentual stärker gedehnt als die Rahmen 15a. Wenn die Bimetallelemente 49 nicht vorhanden wären, hätte daher eine Temperaturerhöhung zur Folge, dass der Ring 5f bei den ersten Verbindungsstellen 21 thermisch erzeugte Kräfte auf die erste Kraftübertragungsvorrichtung 11 ausübt. Diese Kräfte würden sich beim Messen einer Kraft F₁ zu den infolge von dieser auf die erste Kraftübertragungsvorrichtung ausgeübten Kräfte addieren. Die V-förmigen, federnden Bimetallelemente sind nun jedoch derart ausgebildet, dass sie durch eine Temperaturerhöhung gespreizt werden und dabei Druckkräfte auf die Arme 5m ausüben, welche die Kräfte kompensieren, die durch die unterschiedlichen Dehnungen des Rings 5f und der Rahmen 15a entstehen.

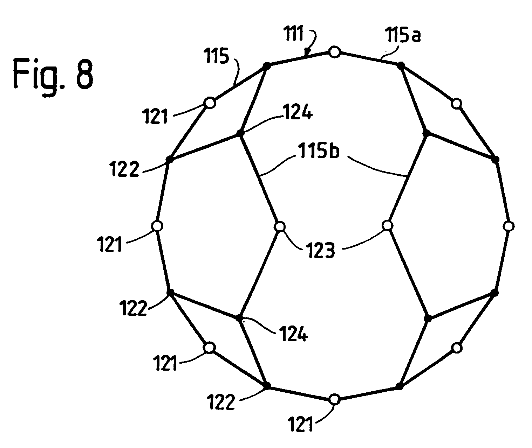

In der Fig. 8 sind schematisch Teile einer Variante der ersten Kraftübertragungsvorrichtung dargestellt, die hier mit 111 bezeichnet ist. Die Kraftübertragungsvorrichtung 111 besitzt zwei übereinander angeordnete, einstückige Plättchen 115, von denen jedes einen Rahmen 115a und zwei Bügel 115b bildet, deren Schenkel wie in der Fig. 7 nur durch Striche dargestellt sind. Der Rahmen 115a hat sechzehn Schenkel und ist bei acht ersten Verbindungsstellen 121 mit Schrauben lösbar mit einem verformbaren Ring verbunden. Zwischen jedem Paar von ersten Verbindungsstellen 121 befindet sich eine zweite Verbindungsstelle 122, wobei eine zweite Verbindungsstelle 122 und die beiden ihr benachbarten ersten Verbindungsstellen 121 analog wie beim Rahmen 15a die Ecken eines Dreiecks bilden.

Jeder Bügel 115b hat an jedem Ende zwei Schenkel, deren eines Ende bei einer der zweiten Verbindungsstellen 122 mit dem Rahmen 115a zusammenhängt. Jeder Bügel besitzt ferner zwei mittlere Schenkel, deren eine Enden mit einem Bügelabschnitt verbunden sind, der eine dritte Verbindungsstelle 123 enthält und mit einer Schraube lösbar mit einem Messwandler verbunden ist. Jeder mittlere Bügelschenkel ist an seinem der dritten Verbindungsstelle 123 abgewandten Ende bei einer vierten Verbindungsstelle 124 mit zwei der sich an einem Bügelende befindenden Schenkel verbunden. Die Verbindungen der Schenkel des Rahmens und der Bügel mit einem eine Verbindungsstelle bildenden Plättchenabschnitt sind analog wie bei den Plättchen 15 durch Biegegelenke gebildet.

Eine zwei Plättchen 115 aufweisende, erste Kraftübertragungsvorrichtung 111 kann ähnlich wie die vorher beschriebene, erste Kraftübertragungsvorrichtung 11 Kräfte von einem verformbaren Ring auf einen Messwandler übertragen. Die Kraftübertragungsvorrichtung 111 ermöglicht einen noch besseren Ausgleich einer ungleichmässigen Verformung des verformbaren Rings als die Kraftübertragungsvorrichtung 11, ist aber komplizierter und aufwendiger als diese.

Bei unverformtem Rahmen 115a bilden dessen Verbindungsstellen 121 und 122 zusammen ein regelmässiges Polygon - nämlich Sechzehneck - und haben dementsprechend alle den gleichen Abstand vom Zentrum des Rahmens. Es wäre jedoch selbstverständlich möglich, die zweiten Verbindungsstellen 122 des Rahmens 115a analog wie diejenigen des Rahmens 15a in grösserem Abstand vom Rahmenzentrum anzuordnen als die ersten Verbindungsstellen 121. Umgekehrt kann man die vier zweiten Verbindungsstellen 22 des Rahmens 15a im gleichen Abstand vom Rahmenzentrum anordnen wie die vier ersten Verbindungsstellen.
Ferner kann man die zweiten Verbindungsstellen eines Rahmens sogar näher bei dessen Zentrum anordnen als die ersten Verbindungsstellen.

Die Kraftmesseinrichtungen können noch in anderer Hinsicht geändert werden. Beispielsweise könnte man eventuell die länglichen Arme 5m durch kurze Vorsprünge ersetzen oder sogar ganz weglassen und die erste Kraftübertragungsvorrichtung 11 dann an diesen Vorsprüngen bzw. unmittelbar am verformbaren Ring befestigen. Ferner könnte man eine erste Kraftübertragungsvorrichtung vorsehen, die nur ein einziges Plättchen aufweist, das einen Rahmen und zwei mit diesem zusammenhängende Bügel bildet. Des weitern wäre es möglich, die Schrauben 17 und/oder die Schrauben 18 durch Niet- und/oder Pressverbindungen ermöglichende Verbindungsmittel zu ersetzen.

Statt bei jedem Arm kann man auch nur bei zwei sich beispielsweise diametral gegenüberstehenden Armen oder sogar nur bei einem einzigen Arm ein Bimetallelement 49 anordnen. Zudem kann man anstelle der Bimetallelemente 49 oder zusätzlich zu diesen mindestens einen Temperaturfühler vorsehen, um die Temperatur der Dose und/oder direkt des verformbaren Rings und/oder direkt der ersten Kraftübertragungsvorrichtung zu messen. Der bzw. jeder Temperaturfühler kann dann mit elektronischen Schaltungsmitteln verbunden sein, die ausgebildet sind, um die durch Temperaturänderungen verursachten Kräfte bei der Auswertung der vom Wandelelement gelieferten, elektrischen Signale zu kompensieren.

## Patentansprüche

1. Kraftmesseinrichtung mit einem zu einer Achse (3) koaxialen Ring (5f), der auf seiner Aussenseite und auf seiner Innenseite je mit einem Krafteinleitorgan (5i, 5k) verbunden, durch von den Krafteinleitorganen (5i, 5k) in ihn eingeleitete Kräfte verformbar und mit einem Messwandler (12) verbunden ist, dadurch gekennzeichnet, dass der Ring (5f) mit dem Messwandler (12) über eine Kraftübertragungsvorrichtung (11, 111) verbunden ist, die mindestens einen Rahmen (15a, 115a) und zwei Bügel (15b, 115b) besitzt, dass der Rahmen (15a, 115a) bei entlang seinem Umfang verteilten, ersten Verbindungsstellen (21, 121) mit dem Ring (5f) verbunden ist und dass jeder Bügel (15b, 115b) bei von den ersten Verbindungsstellen (21, 121) in Abstand stehenden, zweiten Verbindungsstellen (22, 122) mit dem Rahmen (15a, 115a) und bei einer dritten Verbindungsstelle (23, 123) mit dem Messwandler (12) verbunden ist.

2. Kraftmesseinrichtung nach Anspruch 1, dadurch gekennzeichnet, dass der bzw. jeder Rahmen (15a, 115a) zusammen mit den beiden mit ihm verbundenen Bügeln (15b, 115b) aus einem einstückigen Plättchen (15, 115) besteht und dass der Rahmen (15a, 115a) und die Bügel (15b, 115b) Schenkel (15e, 15h) aufweisen, die über Biegegelenke (15f, 15g, 15i, 15k) mit den die Verbindungsstellen (21, 22, 23, 121, 122, 123, 124) enthaltenden Plättchenabschnitten verbunden sind.

3. Kraftmesseinrichtung nach Anspruch 1 oder 2, dadurch gekennzeichnet, dass jede zweite Verbindungsstelle (22, 122) mit den beiden ihr benachbarten ersten Verbindungsstellen (21, 121) ein Dreieck definiert, dessen bei der zweiten Verbindungsstelle (22, 122) gebildeter Scheitel von der Achse (3) weg nach aussen ragt und dass sich die dritten Verbindungsstellen (23, 123) in einer zur Achse (3) parallelen Draufsicht innerhalb des Rahmens (15a, 115a) befinden.

4. Kraftmesseinrichtung nach Anspruch 3, dadurch gekennzeichnet, dass die zweiten Verbindungsstellen (22) bei sich in unverformtem Ruhezustand befindendem Rahmen (15a) einen grösseren Abstand von dessen Zentrum haben als die ersten Verbindungsstellen (21).

5. Kraftmesseinrichtung nach einem der Ansprüche 1 bis 4, dadurch gekennzeichnet, dass die Anzahl der ersten Verbindungsstellen (21, 121) 2ⁿ beträgt, wobei n eine ganze gerade Zahl ist und mindestens den Wert 2 hat.

6. Kraftmesseinrichtung nach einem der Ansprüche 1 bis 5, dadurch gekennzeichnet, dass die Kraftübertragungsvorrichtung (11, 111) zwei entlang der Achse (3) voneinander in Abstand stehende, je mit zwei Bügeln (15b, 115b) verbundene Rahmen (15a, 115a) besitzt, dass der Messwandler (12) zwischen den mit den beiden Rahmen (15a, 115a) verbundenen Bügeln (15b, 115b) angeordnet ist, dass die beiden Rahmen (15a, 115a) bei den ersten Verbindungsstellen (21, 121) miteinander und dem Ring (5f) verbunden sind und dass jeweils zwei Bügel (15b, 115b) bei ihren dritten Verbindungsstellen (23, 123) miteinander und mit dem Messwandler (12) verbunden sind.

7. Kraftmesseinrichtung nach einem der Ansprüche 1 bis 6, dadurch gekennzeichnet, dass die Kraftübertragungsvorrichtung (11, 111) bei den ersten Verbindungsstellen (21, 121) durch Schrauben (17) mit dem Ring (5f) und bei den dritten Verbindungsstellen (23, 123) durch Schrauben (18) mit dem Messwandler (12) verbunden ist.

8. Kraftmesseinrichtung nach einem der Ansprüche 1 bis 7, dadurch gekennzeichnet, dass der Ring (5f) und die beiden Krafteinleitorgane (5i, 5k) zusammen durch einen einstückigen Körper gebildet sind, dass dieser mit dem Ring (5f) zusammenhängende und von diesem wegragende Arme (5m) aufweist und dass der bzw. jeder Rahmen (15a, 115a) bei jeder ersten Verbindungsstelle (21, 121) an einem dem Ring (5f) abgewandten, entlang der Achse (3) gemessen in Abstand vom Ring (5f) stehenden Ende von einem der Arme (5m) befestigt ist.

9. Kraftmesseinrichtung nach Anspruch 8, dadurch gekenzeichnet, dass der bzw. jeder Rahmen (15a, 115a) aus einem Material besteht, dessen thermischer Ausdehnungskoeffizient vom thermischen Ausdehnungskoeffizienten des den Ring (5f) und die Arme (5m) bildenden Materials verschieden ist, und dass an mindestens einem Arm (5m), sowie beispielsweise an mindestens zwei Armen (5m), ein Bimetallelement (49) angreift, um bei Temperaturänderungen durch unterschiedliche Abmessungsänderungen des Rings (5f) und des bzw. jedes Rahmens (15a, 115a) verursachte Kräfte zu kompensieren.

10. Kraftmesseinrichtung nach einem der Ansprüche 1 bis 9, dadurch gekennzeichnet, dass zusätzlich zur genannten, ersten Kraftübertragungsvorrichtung (11, 111) noch eine zweite, zum Messwandler (12) gehörende Kraftübertragungsvorrichtung (31) vorhanden ist, die zwei je bei einer der dritten Verbindungsstellen (23, 123) mit der ersten Kraftübertragungsvorrichtung (11, 111) verbundene Verbindungsorgane (35), zwei Halterungen (37) und diese derart mit den Verbindungsorganen (35) verbindende Übertragungsglieder (39) aufweist, dass eine Abstandsänderung der beiden Verbindungsorgane (35) eine Abstandsänderung der beiden Halterungen (37) verursacht, und dass diese ein Wandelelement (33) mit einem länglichen, im Ruhezustand geraden und zu einer durch die dritten Verbindungsstellen (23, 123) verlaufenden Ebene (25) rechtwinkligen Abschnitt aufweist, der vorzugsweise beim Messen als schwingende Saite dient.

## Claims

1. Force measuring device comprising a ring (5f), which is coaxial with an axis (3), is connected to a respective force input member (5i, 5k) or each of its outer side and its inner side, is deformable by forces introduced into it by the force input members (5i, 5k) and is connected to a transducer (12), characterised thereby, that the ring (5f) is connected to the transducer (12) by way of a force transmission device (11, 111) which has at least one frame (15a, 115a) and two straps (15b, 115b), that the frame (15a, 115a) is connected to the ring (5f) at first connecting points (21, 121) distributed along its circumference and that each strap (15b, 115b) is connected to the frame (15a, 115a) at second connecting points (22, 122) standing at a spacing from the first connecting points (21, 121) and to the transducer (12) at a third connecting point (23, 123).

2. Force measuring device according to claim 1, characterised thereby that the or each frame (15a, 115a) together with both the straps (15b, 115b) connecting it consist of a one-piece platelet and that the frame (15a, 115a) and the straps (15b, 115b) have limbs (15e, 15h) which are connected by way of flexural joints (15f, 15g, 15i, 15k) to the platelet.

3. Force measuring device according to claim 1 or 2, characterised thereby that each second connecting point (22, 122) together with the two first connecting points (21, 121) adjacent to it defines a triangle, the apex of which formed at the second connecting point (22, 122) projects outwardly away from the axis (3), and that, in plan view parallel to the axis (3), the third connecting points (23, 123) are located inside the frame (15a, 115a).

4. Force measuring device according to claim 3, characterised thereby that when the frame (15a) is in the undeformed rest state, the second connecting points (22) have a greater spacing from the centre thereof than the first connecting points (21).

5. Force measuring device according to one of claims 1 to 4, characterised thereby that the number of first connecting points (21, 121) is 2ⁿ, where n is a whole even number and has at least the value 2.

6. Force measuring device according to one of claims 1 to 5, characterised thereby that the force transmission device has two frames (15, 115) which are spaced apart from one another along the axis (3) and are each connected to two straps (15b, 115b), that the transducer (12) is arranged between the straps (15b, 115b) connected to the two frames (15a, 115a) that the two frames (15a, 115a) are connected to one another and to the ring (5f) at the first connecting points (21, 121) and that two straps (15b, 115b) in each case are connected to one another and to the transducer (12) at their third connecting points (23, 123).

7. Force measuring device according to one of claims 1 to 6, characterised thereby that the force transmission device (11, 111) is connected to the ring (5f) by screws (17) at the first connecting points (21, 121) and to the transducer (12) by screws (18) at the third connecting points (23, 123).

8. Force measuring device according to one of claims 1 to 7, characterised thereby that the ring (5f) and the two force introducing members (5i, 5k) are together formed by a one-piece body, that the latter has arms (5m) connected with the ring (5f) and projecting away therefrom and that the or each frame (15a, 115a) is fixed, at each first connecting point (21, 121) to an end of one of the arms (5m) which is opposite the ring (5f) and, measured along the axis (3), is spaced from the ring (5f).

9. Force measuring device according to claim 8, characterised thereby that the or each frame (15a, 115a) consists of a material, the coefficient of thermal expansion of which differs from the coefficient of thermal expansion of the material forming the ring (5f) and the arms (5a) and that at least one arm (5m), as well as for example at least two arms (5m), engages a bimetallic element (49) in order to compensate for forces caused, in the case of temperature changes, by different dimensional changes of the ring (5f) and of the or each frame (15a, 115a).

10. Force measuring device according to one of claims 1 to 9, characterised thereby that in addition to the stated, first force transmission device (11, 111) a second force transmission device (31) belonging to the transducer (112) is also present, which second force transmission device (31) has two connecting members (35) each connected to the first force transmission device (11, 111) at a respective one of the third connecting points (23, 123), two holders (37) and transmission members (39) connecting the latter to the connecting members (35) in such a way that a change in the spacing of the two connecting members (35) causes a change in the spacing of the two holders (37), and that the said second force transmission device (31) has a transducing element (33) with an elongate section which is straight in the rest state and is at right angles to a plane (25) passing through the third connecting points (23, 123) in the rest state.

## Revendications

1. Dispositif de mesure de force comportant une bague (5f) coaxiale par rapport à un axe (3), qui est reliée sur son côté extérieur et sur son côté intérieur à des organes d'induction de force respectifs (5i, 5k), qui est apte à être déformée par des forces induites par les organes d'induction de force (5i, 5k) et qui est reliée à un transformateur de mesure (12), caractérisé en ce que la bague (5f) est reliée au transformateur de mesure (12) par l'intermédiaire d'un dispositif de transmission de force (11, 111) qui comporte au moins un châssis (15a, 115a) et deux étriers (15b, 115b), en ce que le châssis (15a, 115a) est relié à la bague (5f) au niveau de premiers points de liaison (21, 121) répartis sur sa circonférence, et en ce que chaque étrier (15b, 115b) est relié au châssis (15a, 115a) au niveau de deuxièmes points de liaison (22, 122) espacés des premiers points de liaison (21, 121), et au transformateur de mesure (12) au niveau d'un troisième point de liaison (23, 123).

2. Dispositif de mesure de force selon la revendication 1, caractérisé en ce que le ou les châssis (15a, 115a), avec les deux étriers (15b, 115b) qui lui sont reliés, se composent d'une plaquette d'une seule pièce (15, 115), et en ce que le châssis (15a, 115a) et les étriers (15b, 115b) comportent des branches (15e, 15h) qui sont reliées par l'intermédiaire de joints articulés de flexion (15f, 15g, 15i, 15k) aux sections de plaquette contenant les points de liaison (21, 22, 23, 121, 122, 123, 124).

3. Dispositif de mesure de force selon la revendication 1 ou 2, caractérisé en ce que chaque deuxième point de liaison (22, 122) définit, avec les deux premiers points de liaison (21, 121) voisins, un triangle dont le sommet formé au niveau du deuxième point de liaison (22, 122) s'éloigne de l'axe (3) vers l'extérieur, et en ce que les troisièmes points de liaison (23, 123) se trouvent à l'intérieur du châssis (15a, 115a), vus de dessus parallèlement à l'axe (3).

4. Dispositif de mesure de force selon la revendication 3, caractérisé en ce que les deuxièmes points de liaison (22), quand le châssis (15a) est à l'état de repos non déformé, sont plus espacés du centre de celui-ci que les premiers points de liaison (21).

5. Dispositif de mesure de force selon l'une des revendications 1 à 4, caractérisé en ce que le nombre de premiers points de liaison (21, 121) est de 2ⁿ, n étant un nombre pair entier et ayant une valeur d'au moins 2.

6. Dispositif de mesure de force selon l'une des revendications 1 à 5, caractérisé en ce que le dispositif de transmission de force (11, 111) comporte deux châssis (15a, 115a) espacés l'un de l'autre le long de l'axe (3) et reliés chacun à deux étriers (15b, 115b), en ce que le transformateur de mesure (12) est disposé entre les étriers (15b, 115b) reliés aux deux châssis (15a, 115a), en ce que les deux châssis (15a, 115a) sont reliés entre eux et à la bague (5f) au niveau des premiers points de liaison (21, 121), et en ce que deux étriers (15b, 115b) sont reliés entre eux et au transformateur de mesure (12) au niveau de leurs troisièmes points de liaison (23, 123).

7. Dispositif de mesure de force selon l'une des revendications 1 à 6, caractérisé en ce que le dispositif de transmission de force (11, 111) est relié à la bague (5f) par des vis (17), au niveau des premiers points de liaison (21, 121), et au transformateur de mesure (12) par des vis (18), au niveau des troisièmes points de liaison (23, 123).

8. Dispositif de mesure de force selon l'une des revendications 1 à 7, caractérisé en ce que la bague (5f) et les deux organes d'induction de force (5i, 5k) sont formés conjointement par un corps d'une seule pièce, en ce que celui-ci comporte des bras (5m) contigus à la bague (5f) et dépassant de celle-ci, et en ce que le ou les châssis (15a, 115a) sont fixés au niveau de chaque premier point de liaison (21, 121) à une extrémité de l'un des bras (5m) qui est opposée à la bague (5f) et qui est espacée de celle-ci le long de l'axe (3).

9. Dispositif de mesure de force selon la revendication 8, caractérisé en ce que le ou les châssis (15a, 115a) se composent d'un matériau dont le coefficient de dilatation thermique est différent des coefficients de dilatation thermique du matériau formant la bague (5f) et les bras (5m), et en ce qu'un élément bimétallique (49) agit au niveau d'au moins un bras (5m) et d'au moins deux bras (5m), par exemple, afin de compenser les forces causées par des variations de dimensions différentes pour la bague (5f) et le ou les châssis (15a, 115a) en cas de variations de température.

10. Dispositif de mesure de force selon l'une des revendications 1 à 9, caractérisé en ce qu'il est prévu, en plus du premier dispositif de transmission dé force (11, 111) mentionné, un second dispositif de transmission de force (31) qui fait partie du transformateur de mesure (12) et qui comporte deux organes de liaison (35) reliés au premier dispositif de transmission de force (11, 111) au niveau de l'un des troisièmes points de liaison (23, 123), deux attaches (37) et des organes de transmission (39) reliant celles-ci aux organes de liaison (35) de telle sorte qu'une variation d'écartement des deux organes de liaison (35) provoque une variation d'écartement des deux attaches (37), et en ce que ce dispositif de transmission de force (31) comporte un élément transformateur (33) pourvu d'une section oblongue qui est droite en position de repos, qui s'étend à angle droit par rapport à un plan (25) traversant les troisièmes points de liaison (23, 123) et qui sert de préférence de corde vibrante lors de la mesure.
